# EUROPEAN PATENT APPLICATION

(11) **EP 1 205 848 A1**
(43) Date of publication of application: **15.05.2002**
(21) Application number: 00124769.1
(22) Date of filing: 13.11.2000
(51) Int. Cl.: G06F 11/00

(54) **Embedded microcontroller bound-out chip as preprocessor for a logic analyser**

(71) Applicant: TELEFONAKTIEBOLAGET LM ERICSSON, 126 25 Stockholm (SE)
(72) Inventor: Plesner, Erik, 7860 Spottrup (DK)
(74) Representative: Roerboel, Leif

(57) **Abstract**

The invention is concerned with providing access to all those internal signals of an embedded microcontroller that are necessary to debug software run on the microcontroller. In an embedded microcontroller, only some of these signals are directly accessible on the pins of the microcontroller. According to the invention, the missing set of internal signals are provided with the aid of a bond-out chip functionally identical with the embedded microcontroller and connected in parallel herewith. The signals from the embedded microcontroller and from the bond-out chip are provided to a logic analyser.

## Description

### TECHNICAL FIELD

The present invention relates to products comprising embedded microcontrollers (µC) and more particularly to debugging of the software while this is running real-time on a target embedded µC.

### BACKGROUND OF THE INVENTION

When designing products incorporating one or more embedded µC's, it is important to be able to debug the software executed by these µC's while such software is running real-time on the target µC's. This can in general be achieved by using a modern logic analyser (LA) to perform inverse assembly (IA) of the code executed on the particular µC. By inverse assembly is meant a function which can be performed by modern logic analysers, provided the logic analyser has access to all signal activity on the address bus, the data bus, the bus control signals and the microprocessor status signals. The logic analyser also is provided with a copy of the software executed by the microprocessor and of the symbol table. By combining these data, the logic analyser can visualise how the software was executed and carry out source code correlation in the same manner as an interactive debugger. The process is, however, not interactive, i.e. the program flow can only be inspected, not altered.

In most cases where embedded µC's are not used, the inverse assembly carried out by the logic analyser works on the control- and status signals of the microprocessor (µP) core. This is a straightforward approach in the case of a general purpose µP (e.g. for use in workstations), where the µP has all status and control signals from the core directly accessible on the pins of the µP chip.

On a µC designed for the embedded market, the µP core and most of its control signals are concealed on-chip and only visible through an external bus interface (EBI). Only a sub-set of the address- and data signals are accessible off-chip, and all of the µP control- and status signals are used to generate a few off-chip control signals, or simply ignored. The off-chip control signals either have the wrong format with respect to the inverse assembly or do not provide enough status information from the core of the µP to allow the inverse assembly to work correct. The problem is particularly serious if the EBI contains data or program cache (or both). The native control and status signals are concealed on-chip in order to save pins on the package of the embedded µC, thereby saving both area and costs.

The manufactures of embedded µC's are addressing this problem by offering so called "bond-out" versions of the chips, which may have many more pins in order to allow all internal busses and control- and status signals to be routed to an external pin. The bond out chip behaves exactly like the embedded µC chip and makes the internal signals observable by the LA/IA at the same time.

Bond-out chips are often used in emulators. Emulators usually contain a number of auxiliary logic circuits, buffers, housekeeping microprocessors, memory, host interfaces etc. The buffers and other auxiliary logic circuits imply that the emulator can not run at the full speed of the embedded µC chip. Emulators are generally expensive, sophisticated pieces of equipment that often require a lot of configuration in order to work correct with the target application. The major drawback of an emulator is, however, that the µC chip on the target has to be removed and replaced by the emulator pod. This is a serious problem with fine pitch SMD µC's.

### SUMMARY OF THE INVENTION

According to the preceding description of the problems of debugging software while this is running real-time on a target embedded microcontroller, it is an object of the present invention to provide a device with the aid of which all internal signals relevant for said debugging of software can be made observable.

It is a further object of the present invention to provide a device which can be used as a pre-processor for a logic analyser in that it generates the missing internal signals from the microcontroller which are needed to carry out said debugging with the aid of the logic analyser.

As a consequence of the disadvantages associated with the use of an emulator to simulate the behaviour of the microprocessor core in the embedded microcontroller, it is a further object of the present invention to provide full observability to the internal signals of the microprocessor core without using an emulator.

According to the invention, these objects are attained by using a bond-out chip to generate said missing internal signals. According to the invention, the bond-out chip is connected in parallel to all pins of the target embedded microcontroller. In this manner the bond-out chip receives exactly the same input signals as the target embedded microcontroller and hence behaves in exactly the same way. Thus, the bond-out chip can for instance be used as a pre-processor for a logic analyser providing those internal signals from the embedded microcontroller which are not directly accessible/observable from outside. In this way the logic analyser is not looking at the target microprocessor itself, but at a 100% correct mirror hereof. The subset of signals from the target embedded microcontroller that are accessible from outside are thus provided to the logic analyser, and an exact replica of those signals not present from outside the target microcontroller is provided by the bond-out chip.

In this manner the disadvantages of using an emulator in the debugging process as set forth in the introduction are overcome. It is specifically advantageous that the target microcontroller need not to be removed during debugging (in fact the target microcontroller must necessarily be present in order to deliver said subset of signals that are accessible from the target microcontroller). Furthermore, a pre-processor according to the invention is much less complex than a usual emulator and hence much cheaper, and no set-up of the pre-processor is required as opposed to the emulator.

It is a further major advantage with the pre-processor according to the invention that it is the target microcontroller itself that is controlling the target circuit board and not an emulator or the pre-processor.

It is a further advantage with the pre-processor according to the invention that although there will be a speed penalty due to the time constant resulting from parasitic capacitance's and protection resistors which will necessarily be present in a practical embodiment of the invention, the pre-processor will nevertheless in general be able to run at a higher speed than the emulator.

Furthermore, it is an advantage that the pre-processor according to the invention can - and normally will - be powered from the target microcontroller. In cases where an emulator is used instead of the pre-processor according to the invention, both target and emulator must be turned off (i.e. not powered) when the emulator is connected and disconnected to/from the target. During the power-up phase, it is very important to power up the target and the emulator in the right sequence. Specifically the emulator should always be powered up before the target or vice versa. The right sequence depends on the emulator. If the target and the emulator are powered up in the wrong sequence, permanent damage may occur to the target or the emulator or both. This problem is entirely eliminated with the pre-processor according to the invention.

### BRIEF DESCRIPTION OF THE DRAWINGS

The invention will now be described in more detail with reference to the accompanying drawings, in which
figure 1 is a microprocessor µP with observable signals connected to a logic analyser;
figure 2 is an embedded microcontroller µC with concealed signals;
figure 3 is a bond-out chip connected to a logic analyser; and
figure 4 is an embedded µC connected to a bond-out chip functioning as a pre-processor for a logic analyser according to the present invention.

### DETAILED DESCRIPTION OF THE INVENTION

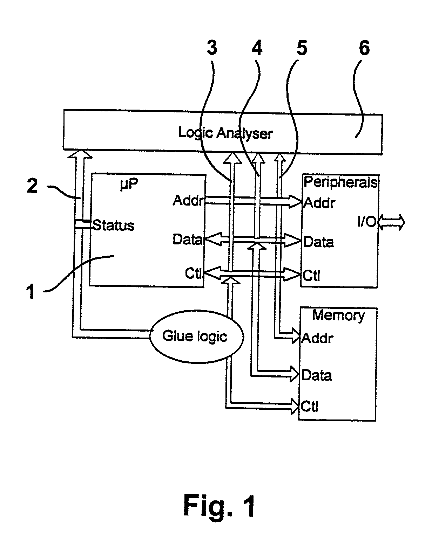

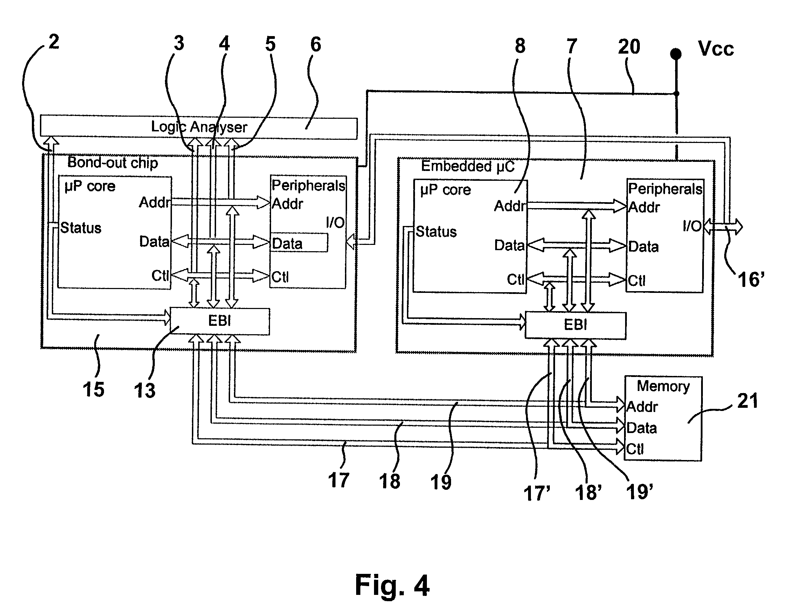

In the following a detailed description of one embodiment of the invention is given. Specifically this embodiment is shown in figure 4, whereas figures 1 through 3 are related to prior art, as already briefly described in the introduction.

With reference to figure 1, there is shown a microprocessor µP designated by 1 running software to be debugged. The microprocessor 1 is provided with access terminals for status-, address-, data- and control signals respectively, and all of these signals are accessible for a logic analyser 6 via appropriate signal paths 2, 3, 4 and 5. All signals from the microprocessor 1 are thus observable from outside, and it is thus possible using the logic analyser 6 to trace the execution of the software completely.

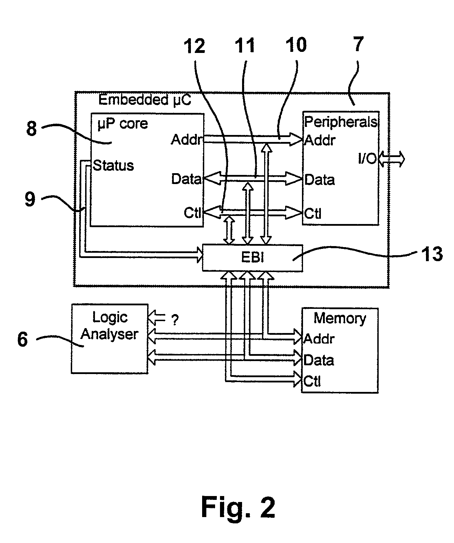

An entirely different situation is depicted in figure 2 showing an embedded microcontroller µC 7 comprising a microprocessor core 8 running the software to be debugged. In this case some of the signals needed for a logic analyser to trace the software execution are made observable via an external bus interface EBI 13 provided in the embedded microcontroller, but only a sub-set of the address- and data signals 10, 11 are observable off-chip, and all of the control- and status signals 12, 9 from the microprocessor are used to generate a few off-chip control signals, or simply ignored. The logic analyser 6 thus suffers from a lack of information necessary to be able to trace software execution in the microprocessor core 8.

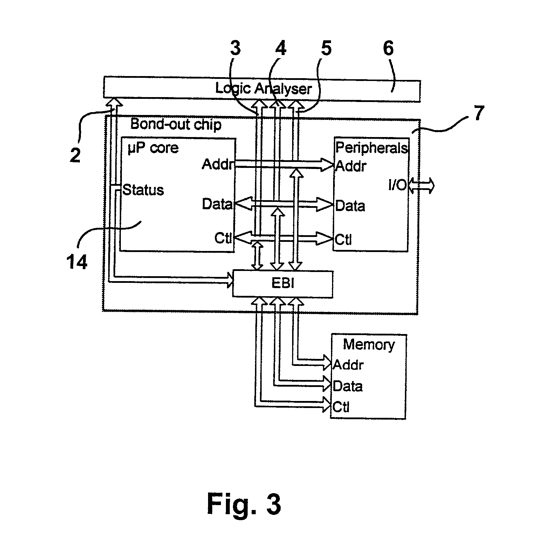

A prior art solution to this problem is presented in figure 3 where the microprocessor core 14 of the embedded microcontroller 7 is a bond-out chip thus providing external access/observability to all relevant signals in the microprocessor core 14. The bond-out chip comprises pins making the status signals of the microprocessor core indirectly observable, as indicated by 2 in the figure and similarly pins providing observability to control signals 3, data signals 4 and address signals 5 of the microprocessor core 14.

Thus, the logic analyser 6 is in this case provided with all necessary information to be able to perform inverse assembly.

Referring now to figure 4, there is shown a bond-out chip functioning as a pre-processor for a logic analyser according to the present invention. The figure shows the bond-out chip 15 connected in parallel with the target embedded microcontroller 7. Specifically the I/O ports of the target and the pre-processor are connected via bus 16, and the external bus interfaces (EBI) 13 of the pre-processor 15 and the target 7 respectively are interconnected by means of busses 17, 18 and 19 carrying address-, data- and control signals respectively. Internal status-, control-, data- and address signals are furthermore provided by the bond-out chip 15 to the logic analyser 5 via busses 2, 3, 4 and 5 respectively. The pre-processor 15 is connected to all pins of the target microcontroller 7 for instance by means of a Snap-On probe clip attached to the target microcontroller or via dedicated board-to-board connectors surrounding the target microcontroller. The logic analyser is provided with signals from the target microcontroller 7 and with additional control- and status signals from the bond-out chip 15. It is advantageous - although not always necessary - that the RESET signals of the embedded microcontroller 7 and of the bond-out chip 15 be synchronised to the system clock signal in order to guarantee that the target chip and the bond-out chip recognises desertion of reset in the same clock cycle. When the microcontroller is configuring itself after reset, this is done in exactly the same way on both the target microcontroller 7 and the pre-processor 15 including the functionality and polarity of I/O pins. If this feature is not present, the pre-processor 15 will normally function anyway, but this can not generally be guaranteed.

On the pre-processor 15, those signals which are input-only on the target microcontroller 7 are connected directly to the bond-out chip. Signals which are bi-directional - or which can be programmed to be either input or output on the target microcontroller 7 - are connected to target through suitable protection resistors (not shown), e.g. 330 ohms resistors. In this way they still work as inputs bot will not be able to cause contention when they are working as outputs. This is important, as the target chip and the bond-out chip may have different timing due to different batches, temperature, ageing etc.

The value of the protection resistors must be chosen large enough to ensure that the maximum output current of the respective microcontroller pin (Imax) can not be exceeded. Specifically it is required that R>= Vcc/lmax, where Vcc is the supply voltage.

Furthermore, if the target microcontroller contains non-volatile memory, it must be assumed that the non-volatile memories of the target microcontroller 7 and the pre-processor bond-out chip 15 are identical before the pre-processor 15 is connected to the target microcontroller 7. If the non-volatile memory of the target microprocessor 7 can be in-circuit programmed, the target microcontroller 7 can be programmed with the pre-processor 15 fitted. The programming will affect the pre-processor 15 as well, and the problem is solved (subject to programming algorithm).

In the embodiment shown in figure 4, the bond-out chip 15 receives its power supply 20 directly from the power supply Vcc of the embedded microcontroller 7, as previously mentioned.

## Claims

1. A method for debugging software run on an embedded microcontroller (7), a first subset of the internal signals of which are accessible from outside and the remaining internal signals of which are not accessible from outside, said method comprising:
Establishing the necessary external connections to/from the embedded microcontroller (7) to enable this to execute the software run by the microcontroller in a desired manner;
Connecting a second microcontroller (15), a second subset of the internal signals of which are accessible from outside, in parallel with said embedded microcontroller (7);
Providing said first subset of internal signals from the embedded microcontroller (7) that are accessible from outside and which are necessary for said debugging to a logic analyser (6);
Providing the remaining internal signals which are required for software debugging from said second microcontroller (15) to said logic analyser (6);
where said second microcontroller (15) is functionally identical with said embedded microcontroller (7).

2. A method according to claim 1, where the RESET signals of the embedded microcontroller (7) and of said second microcontroller (15) are synchronised with the aid of the system CLOCK signal.

3. A method according to claim 1, where said second subset of internal signals comprise all internal signals from the second microcontroller (15).

4. A method according to claim 1, where said second subset of internal signals comprise control-, data-, address- and status signals (4, 5, 6, 9) from said microcontrollers (7, 15).

5. A system for debugging software run on an embedded microcontroller (7), some of the internal signals of which are accessible from outside and some of which are not accessible from outside, said system comprising:
A bond-out chip (15) functionally identical to said embedded microcontroller (7), where all internal signals (2, 3, 4, 5) are accessible from outside;
A logic analyser (6) receiving all internal signals necessary for said debugging;
Where said bond-out chip (15) is connected in parallel with said embedded microcontroller (7), and where a first subset of internal signals necessary for said debugging is provided to said logic analyser (6) from said microcontroller (7), and the remaining internal signals necessary for said debugging is provided to said logic analyser (6) from said bond-out chip (15).

6. A system according to claim 5, where those signals that are only input signals to said embedded microcontroller are connected to the corresponding input terminals on said bond-out chip directly, whereas those signals which are bi-directional, or which can be programmed to be either input or output signals to/from said embedded microcontroller (7) are connected to the microcontroller (7) through protection resistors.

7. A system according to claim 6, where said protection resistors are chosen according to the equation R>= Vcc/lmax, where Vcc is the supply voltage and Imax is the maximum allowable current for the specific terminal of the microcontroller.

8. A system according to claim 6, where said protection resistors are in the order of 330 ohms.

9. A system according to any of the preceding claims 5 to 8, where said bond-out chip (15) receives its power supply (20) directly from the power supply of said embedded microcontroller (7).

10. A device for providing observability of all internal signals from an embedded microcontroller (7), said device comprising a bond-out chip (15) functionally identical with said embedded microcontroller (7).
